# EUROPÄISCHE PATENTSCHRIFT

(11) **EP 2 619 157 B1**
(45) Veröffentlichungstag und Bekanntmachung des Hinweises auf die Patenterteilung: **19.07.2017**
(21) Anmeldenummer: 10801369.9
(22) Anmeldetag: 29.10.2010
(51) Int. Cl.: C05F 17/00, C05D 9/00, C05F 5/00, C05F 17/02

(54) **VERFAHREN ZUR HERSTELLUNG EINER DÜNGEMITTELVORSTUFE SOWIE EINES DÜNGEMITTELS**
METHOD FOR THE PRODUCTION OF A FERTILIZER PRECURSOR AND ALSO OF A FERTILIZER
PROCÉDÉ DE FABRICATION D'UN PRÉCURSEUR D'ENGRAIS AINSI QUE D'UN ENGRAIS

(30) Priorität: 20.09.2010 DE 102010045831
(43) Veröffentlichungstag der Anmeldung: 31.07.2013
(73) Patentinhaber: Rhönschotter GmbH, 97789 Oberleichtersbach (DE)
(72) Erfinder: ENDERS-DOUGLAS, Anja, 97789 Oberleichtersbach (DE)
(74) Vertreter: advotec.
(86) Internationale Anmeldenummer: PCT/DE2010/001251
(87) Internationale Veröffentlichungsnummer: WO 2012/037908

(56) Entgegenhaltungen:
- FR-A- 518 184
- FR-A- 623 247
- GB-A- 146 351
- GB-A- 270 957
- DATABASE WPI Week 200877 Thomson Scientific, London, GB; AN 2008-N03347 XP002645449, & CN 101 215 200 A (HAN Z) 9. Juli 2008 (2008-07-09)

## Beschreibung

Die Erfindung betrifft ein Verfahren zur Herstellung einer Düngemittelvorstufe sowie eines Düngemittels nach dem Oberbegriff des Anspruchs 1.

Aus dem Stand der Technik sind Düngemittel sowie Verfahren und Vorrichtungen zu deren Gewinnung bekannt, die zur Anreicherung von Pflanzennährstoffen im Boden vorgesehen sind. Bei diesen Nährstoffen handelt es sich in erster Linie um Phosphor, Stickstoff und Kalium. Die so genannten Volldünger bzw. NPK-Dünger, die mitunter mit einzelnen weiteren Mineralien angereichert sein können, führen jedoch bei intensiver landwirtschaftlicher Nutzung einer Anbaufläche bzw. eines Bodens und dadurch bedingter intensiver Düngung zu einer Vielzahl von Nachteilen.

Zunächst führt eine intensive Düngung einer landwirtschaftlich genutzten Fläche zur Versalzung und Verkarstung des Bodenbereichs. Damit geht eine Verschlechterung der mechanischen Bodenstruktur einher, welche für das Pflanzenwachstum ebenfalls von besonderer Wichtigkeit ist. Gleichzeitig ist die Verschlechterung der Nährstoff- sowie Wasserspeicherkapazität in einem derart überdüngten Boden die Folge. Die Versalzung der Böden führt weiterhin zu einer Verschlechterung der Nährstoffaufnahmefähigkeit der Pflanzen aufgrund des osmotischen Druckgradienten. Außerdem führen die bekannten Düngemittel stets zu einer unausgewogenen Nährstoffversorgung des Bodens, was sich dementsprechend auch im geringen Gehalt von wichtigen Nährstoffen für Menschen und Tiere in den Früchten bzw. Erzeugnissen solcher intensiv bewirtschafteten und gedüngten Böden niederschlägt. Schließlich sind auch negative Folgen für den Wasserkreislauf, wie beispielsweise Algenblüte oder Wasserversalzung, bekannt.

Demnach führt die Verwendung bekannter Düngemittel zu einem Abwärtskreislauf, der die Qualität des Bodens und seiner Erzeugnisse stetig verschlechtert. Ein weiterer Nachteil bekannter Düngemittel ist darin zu sehen, dass ihre Herstellungskosten derart hoch sind, dass sie für den Einsatz in Schwellen- und/oder Entwicklungsländern schlicht zu teuer sind.

Die FR 518 184 A beschreibt ein Verfahren zur Umwandlung unlöslicher oder schlecht löslicher Verbindungen in wässrigem Milieu, in welchem Metall-und Mineralienverbindungen mittels des Einsatzes von Mikroorganismen in Lösung gebracht werden. Die Mikroorganismen, die in dem Lösungsvorgang zum Einsatz kommen, werden allgemein als "Fermenter" bezeichnet. Dabei ist es vorgesehen, dass die gelösten Substanzen direkt, insbesondere in der Landwirtschaft, anwendbar bzw. ausbringbar sind.

Die GB 146 351 A offenbart ein verbessertes Verfahren zum Aufschluss von phosphathaltigem Eisenerz, wobei mineralische Phosphate mit Dung oder anderen organischen Substanzen vermischt werden, so dass die Säuren, welche mittels Fermentation der organischen Substanzen entstehen, die Phosphate in pflanzenzugängliche Zustände überführen. Des Weiteren ist für die Düngemittelherstellung die Zugabe von Säure produzierenden Bakterien zu organischem Material zusammen mit Phosphatasche vorgesehen, wodurch eine Denitrifikation erreicht wird. Die Phosphate liegen anschließend in wasserlöslicher Form vor, so dass diese direkt absorbierbar und in der Landwirtschaft einsetzbar sind.

Der Datenbankeintrag XP 002 645 449 in Verbindung mit CN 101 215 200 A offenbart die Produktion von organischem Düngemittel, bei welchem eine, insbesondere verschiedene säureproduzierende Bakterien umfassende Lösung zur Fermentation von organischem Material eingesetzt wird. Der Einsatz einer entsprechenden Bakterienlösung ist ebenfalls zur Fermentation bzw. Verwitterung von unter anderem verwitterter Kohle und Betonit offenbart.

Die GB 270 957 A beschreibt verbesserte Düngemittel, wobei vergorene Rübenmolasse bzw. Rückstände aus der Destillation von Rübenmolasse mit Mineralien gemischt werden.

Die FR 623 247 A befasst sich mit organischen und organo-mineralischen Düngemitteln, wobei vergorene Rübenmolasse aus der Zuckerherstellung zum Einsatz kommt. Diese wird mit Gesteinsmehl, insbesondere Urgesteinsmehl, vermischt.

Ausgehend von diesem Stand der Technik ist es deshalb Aufgabe der vorliegenden Erfindung, eine neuartige Düngemittelvorstufe sowie ein neuartiges Düngemittel und ein Verfahren zu deren Herstellung vorzuschlagen, welches das biochemische Gleichgewicht des Bodens erhält bzw. wiederherstellt und gleichzeitig eine ausgewogene Nährstoffversorgung der Pflanzen bei äußerst geringen Düngemittelgaben sicherstellt. Unter dem Sammelbegriff der Beibehaltung bzw. Wiederherstellung des Bodengleichgewichts sind dabei mehrere Aufgaben der vorgeschlagenen Erfindung zusammengefasst. Dazu gehören beispielsweise die Verbesserung der Bodenstruktur auf biochemischer, mikrobiologischer, bakterieller sowie auf mechanischer Ebene, die Verbesserung der Wasser- und/oder Nährstoffspeicherkapazität, insbesondere Mikronährstoffkapazität und/oder Ionenaustauschkapazität, und die Förderung der Selbstregeneration des Bodens. Weiter ist es Ziel der Erfindung, auf den mit der Erfindung gedüngten Böden höhere, länger haltbare, nährstoffreichere und fusarienfreie Ernteerträge zu erzeugen.

Diese Aufgabe wird durch ein Verfahren nach der Lehre des Anspruchs 1 gelöst.

Vorteilhafte Ausführungsformen der Erfindung sind Gegenstand der Unteransprüche.

Die Erfindung beruht auf dem Grundgedanken, dass die Verwitterung von zumindest einer mineralstoffhaltigen Substanz in Analogie zu den in einem intakten bzw. gesunden Boden ablaufenden Prozessen technisch durchgeführt wird. Dabei führt die Ähnlichkeit zu den in der Natur ablaufenden Verwitterungsprozessen dazu, dass alle Komponenten des Düngemittels bzw. der Düngemittelvorstufe das Bodengleichgewicht fördern und/oder wiederherstellen. Dabei liegt die besondere erfinderische Leistung des vorgeschlagenen Verfahrens darin, dass die technische Verwitterung von zumindest einer mineralstoffhaltigen Substanz in erheblich größerem Umfang als in der Natur abläuft und zudem eine enorme Steigerung der Verwitterungsgeschwindigkeit erreicht wird. Bezüglich der Verwitterungsgeschwindigkeit ist davon auszugehen, dass mittels des erfindungsgemäßen Verfahrens eine an die Natur angelehnte, technische Mineralstoffverwitterung mit einer bis zu tausendfachen Geschwindigkeit im Vergleich zur im gesunden Boden ablaufenden biochemischen Verwitterung erreicht werden kann.

Dazu sieht das erfindungsgemäße Verfahren vor, dass in einem ersten Verfahrensschritt eine saure Ausgangslösung, die zumindest eine organische Säure enthält, hergestellt wird. In einem daran anschließenden zweiten Verfahrensschritt wird die saure Ausgangslösung zu zumindest einer mineralstoffhaltigen Substanz zugegeben. Daran schließt sich in einem weiteren Verfahrensschritt die künstliche Verwitterung der in der mineralstoffhaltigen Substanz enthaltenen Mineralien durch die Ausgangslösung an.

Um die Reaktivität bzw. die Reaktionsgeschwindigkeit der sauren Ausgangslösung zu steigern, sieht das erfindungsgemäße Verfahren vor, dass der pH-Wert der Ausgangslösung in einem Bereich zwischen pH 0 und pH 3 liegt.

Um bei der technischen Verwitterung der zumindest einen mineralstoffhaltigen Substanz eine größtmögliche Ähnlichkeit zu den natürlich in einem gesunden Boden ablaufenden Verwitterungsprozessen zu erreichen, ist es besonders vorteilhaft, wenn die saure Ausgangslösung weitere Inhaltsstoffe aufweist, die nach Art und/oder Funktion ebenfalls bei der natürlichen, biochemischen Verwitterung von Mineralien im Pflanzboden vorkommen. Dementsprechend sieht das erfindungsgemäße Verfahren vor, dass zumindest eine Aminosäure in der Ausgangslösung gelöst ist, und/oder zumindest ein Enzym in der Ausgangslösung gelöst ist, und/oder zumindest ein Alkohol in der Ausgangslösung gelöst ist, und/oder die Ausgangslösung zumindest eine Bakterienart enthält, und/oder zumindest ein Hefestamm in der Ausgangslösung gelöst ist, und/oder Koffein in der Ausgangslösung gelöst ist, und/oder zumindest eine antibiotische Substanz in der Ausgangslösung gelöst ist, und/oder zumindest ein Polyphenol in der Ausgangslösung enthalten ist.

Eine derart komplexe Ausgangslösung kann insbesondere dann besonders effektiv, d.h. einfach und schnell bezüglich qualitativer und quantitativer Zusammensetzung, gewonnen werden, wenn zur Herstellung der sauren Ausgangslösung ebenfalls ein naturverwandter biochemischer Prozess angewandt wird. Darum sieht das erfindungsgemäße Verfahrens vor, dass die saure Ausgangslösung durch Umsetzung einer gezuckerten Teelösung mit Kombucha als Umsetzung einer Nährlösung mit einer symbiotischen Hefebakterienkolonie erzeugt wird. Als Akronym für eine symbiotische Hefebakterienkolonie wird vielerorts SCOBY als Abkürzung von "symbiotic colony of bacteria and yeasts" verwendet.

Da in der Natur Gesteine den Ausgangspunkt für die natürliche Verwitterung und damit den Ausgangspunkt für die Bereitstellung von Nährstoffmineralien für Pflanzen bilden, ist vorgesehen, dass im erfindungsgemäßen Verfahren Gesteine als mineralstoffhaltige Substanz zur künstlichen Verwitterung verwendet werden. Mit anderen Worten bedeutet dies, dass im Gegensatz zu bekannten Verfahren zur Herstellung von Düngemitteln und/oder Düngemittelvorstufen es gerade nicht Ziel des vorgeschlagenen Verfahrens ist, einzelne Pflanzennährstoffe möglichst in hochreinen Formen zu gewinnen und anschließend daraus eine Nährstoffmischung herzustellen, sondern mineralstoffhaltige Substanzen, insbesondere Gesteine, künstlich zu verwittern, deren mineralische Anteile besonders ausgewogen sind und auch in der Natur bei natürlich ablaufender Verwitterung zu außerordentlich fruchtbaren Böden führen. Daher ist es für das erfindungsgemäße Verfahren vorgesehen, dass die zumindest eine mineralstoffhaltige Substanz Gesteinsmehl, insbesondere Urgesteinsmehl oder Geomineralmehl, umfasst. Die Verwendung von Gesteinsmehl ist besonders vorteilhaft für das Verfahren, da es durch eine Vergrößerung der Oberfläche im Vergleich zu ungemahlenem Gestein einen effektiveren Angriff der sauren Ausgangslösung und damit eine optimierte Prozessführung der technischen Verwitterung gewährleistet.

Gemäß einer weiteren vorteilhaften Ausführungsform des erfindungsgemäßen Verfahrens ist vorgesehen, dass die zumindest eine mineralstoffhaltige Substanz Urgesteinsmehl, insbesondere Urgesteinsmehl magmatischen Ursprungs, aus Diabas und/oder Diatomeen und/oder Betonit und/oder Lignit umfasst. Für eine optimale Düngewirkung ist es weiter besonders vorteilhaft, wenn ein Fe²⁺-haltiges Gesteinsmehl in der zumindest einen mineralstoffhaltigen Substanz vorliegt. Die Verwendung von Diabas ist aufgrund des spezifischen Mineralstoff- und Spurenelementgehalts vorteilhaft. Betonit zeichnet sich durch seine hohe Kationentauscherkapazität (KAK) für das erfindungsgemäße Verfahren aus. Der Einsatz von Lignit in der mineralstoffhaltigen Substanz des Verfahrens sorgt für ein ausreichendes Vorkommen von Huminstoffen. Bei einer Verwendung von Lignit ist es besonders vorteilhaft, wenn der Schwefelanteil zwischen 3% und 9%, insbesondere zwischen 5% und 7%, liegt.

Eine optimale technische Verwitterung der zumindest einen mineralstoffhaltigen Substanz ist gegeben, wenn in der zumindest einen mineralstoffhaltigen Substanz Gesteinsmehl mit Korngrößen von 10 bis 40 µm insbesondere 10 bis 20 µm, vorliegt.

Eine weitere Beschleunigung der technischen Verwitterung wird in dem erfindungsgemäßen Verfahren dadurch erreicht, dass die zumindest eine mineralstoffhaltige Substanz von einem für die saure Ausgangslösung durchlässigen Gefäß, insbesondere einem textilen Gewebebeutel aus synthetischer oder natürlicher Faser, umschlossen ist. Als besonders vorteilhaft hat sich ergeben, wenn die zumindest eine mineralstoffhaltige Substanz in einen Gewebebeutel aus Nylon bzw. Polyamid gefasst ist, während sie mit der sauren Ausgangslösung im Kontakt ist.

Eine nahezu vollständige Umsetzung bzw. künstliche Verwitterung der zumindest einen minerealstoffhaltigen Substanz wird erreicht, wenn diese über einen Zeitraum von 7 bis 60 Tagen, insbesondere zwischen 30 bis 60 Tagen, in Kontakt mit der sauren Ausgangslösung steht. Dabei können unterschiedlichste Faktoren Einfluss auf die entsprechende Zeitdauer der künstlichen Verwitterung ausüben. Neben der Temperatur, bei der die technische Verwitterung erfolgt, können beispielsweise auch Größen wie Gefäßgröße, Gefäßgeometrie und/oder mechanische Einflüsse auf die saure Ausgangslösung und die darin befindliche mineralstoffhaltige Substanz die erforderliche Verwitterungszeit beeinflussen.

Die aus der technischen Verwitterung der zumindest einen mineralstoffhaltigen Substanz mit der sauren Ausgangslösung hervorgehende Lösung kann bereits als Düngemittelvorstufe bezeichnet werden. Auch wenn diese für eine direkte Anwendung im Erdreich noch ungeeignet ist, so bietet sie doch den Ausgangspunkt für ein effektives Düngen ohne Beeinträchtigung der mechanischen und/oder biochemischen und/oder bakteriellen und/oder mikrobiologischen Bodengegebenheiten und einer Verbesserung der Wasser- und Nährstoffspeicherung sowie der Be- oder Durchlüftung. Um eine derartige Düngung zu ermöglichen, sieht das erfindungsgemäße Verfahren vor, dass die aus der technischen Verwitterung hervorgehende Lösung zu einer Trägerlösung gegeben wird. Dabei kann die Trägerlösung verschiedenste Aufgaben bezüglich ihrer Funktion bei der Anwendung des Düngemittels sowie für die Wechselwirkung mit der Düngemittelvorstufe erfüllen. Beispielsweise kann vorgesehen sein, dass die Trägerlösung selbst mit pflanzenverwertbaren Nährstoffen, insbesondere Stickstoffverbindungen und/oder Flavoniden, angereichert ist. Andererseits kann aber auch vorgesehen sein, dass die Trägerlösung Stoffe bzw. Substanzen umfasst, die die Aktivität von bodeneigenen Mikroorganismen und/oder Pilzen steigern. Dadurch kann der mit dem erfindungsgemäßen Verfahren hergestellte Dünger durch Zugabe der Düngemittelvorstufe zur Trägerlösung neben einer Nährstoffbereitstellung auch die Bevorratung, Aufbereitung und Zurverfügungstellung bzw. den Transport von Nährstoffen zur Pflanze im Boden sowie die mechanische Verankerung der Pflanze im Boden positiv beeinflussen.

Eine besonders vorteilhafte Nährstoffzusammensetzung des Düngemittels wird erreicht, wenn Düngemittelvorstufen aus separater technischer Verwitterung von Diabas-Gesteinsmehl, Diatomeen-Gesteinsmehl, Lingit und Fe²⁺-haltigem Gesteinsmehl in gleichen Volumenanteilen zur Trägerlösung gegeben werden. Beispielsweise kann vorgesehen sein, dass zwischen 35 und 65 ml der mittels Verwitterung von jeweils einem Gesteinsmehl gewonnenen Düngemittelvorstufe zu 1 Liter der Trägerlösung gegeben werden.

Um eine Beeinträchtigung des Boden-pH-Werts des Bodens, für den der jeweilige Dünger eingesetzt werden soll, auszuschließen, ist es besonders vorteilhaft, wenn das erfindungsgemäße Verfahren einen Verfahrensschritt umfasst, bei welchem nach Zugabe der zumindest einen durch künstliche Verwitterung zumindest einer mineralstoffhaltigen Substanz gewonnenen Lösung bzw. Düngemittelvorstufe zur Trägerlösung eine Verdünnung auf einen neutralen pH-Wert, insbesondere einen pH-Wert zwischen 6,8 und 7,2, erfolgt. Alternativ dazu kann ebenfalls vorgesehen sein, dass der Boden-pH-Wert durch Zugabe des mit dem erfindungsgemäßen Verfahren hergestellten Düngemittels gezielt beeinflusst wird. Demnach kann es vorteilhaft sein, wenn nach der Zugabe der zumindest einen durch künstliche Verwitterung zumindest einer mineralstoffhaltigen Substanz gewonnenen Lösung bzw. Düngemittelvorstufe zur Trägerlösung eine Verdünnung auf einen entsprechend der gewünschten Beeinflussung des Boden-pH-Werts erforderlichen pH-Wert erfolgt.

Um die Aktivität von Mikroorganismen sowie die Aktivität anderer im Boden befindlicher Organismen zu steigern und gleichzeitig zusätzliche Pflanzennährstoffe in den Boden einzubringen, ist es besonders vorteilhaft, wenn die Trägerlösung aus einer Biomassefermentationslösung und einer Nährlösung hergestellt wird. Dabei sieht das erfindungsgemäße Verfahren vor, dass die Nährlösung neben der Anreicherung mit Pflanzennährstoffen insbesondere zur Steigerung von im Bodenbereich befindlichen Organismen und die Biomassefermentationslösung insbesondere zur weiteren Anreicherung von Pflanzennährstoffen im Düngemittel vorgesehen ist.

Auch bei der Herstellung der Biomassefermentationslösung ist es sinnvoll, wenn zur Gewinnung von Pflanzennährstoffen Prozesse verwendet werden, die an die natürlichen Prozesse zur Extraktion von Pflanzennährstoffen aus Biomasse angelehnt sind. Dementsprechend sieht eine vorteilhafte Ausführungsform des erfindungsgemäßen Verfahrens vor, dass die Biomassefermentationslösung durch Fermentation eines flüssigen, gezuckerten Biomasseextrakts mit einer SCOBY, insbesondere Kombucha, gewonnen wird. Analog zu der Gewinnung von Mineralstoffen aus der zumindest einen mineralstoffhaltigen Substanz ist auch bei der Gewinnung der Biomassefermentationslösung die Verwendung einer symbiotischen Hefebakterienkultur dadurch angezeigt, dass eine derartige Fermentation von Biomasse den natürlichen Prozessen in einem intakten Pflanzboden sehr nahe kommt. Alternativ dazu kann ebenfalls vorgesehen sein, dass aus einer gezuckerten Lösung mit der SCOBY zunächst erneut eine saure Ausgangslösung hergestellt wird, die dann zur Fermentation des flüssigen Biomasseextrakts verwendet wird. Es sei an dieser Stelle darauf hingewiesen, dass es sich bei der oben genannten Biomasseumsetzung nicht ausschließlich um eine Fermentation im Sinne eine unter Sauerstoffausschluss ablaufenden Umsetzung handelt. Auch aerobe Umsetzung, sogenannte Respiration, findet dabei in gewissem Umfang statt. Zur begrifflichen Vereinheitlichung und Vereinfachung soll aber hier im Folgenden von einer Fermentation gesprochen werden.

Um die Edukte sowie Produkte der Fermentation nicht nachteilig zu beeinflussen und gleichzeitig einen schnellstmöglichen Fermentationsvorgang zu ermöglichen, besteht eine vorteilhafte Ausführungsform darin, dass die Fermentation bei Temperaturen von 20° bis 30°C, insbesondere bei 24° bis 28°C, erfolgt.

Nicht ausschließlich, aber zumindest teilweise, von der Wahl der Fermentationstemperatur abhängig ist die für das erfindungsgemäße Verfahren vorteilhafte Fermentationsdauer. Für das vorgeschlagene Verfahren hat sich gezeigt, dass eine Fermentation über einen Zeitraum von 3 bis 4 Wochen eine besonders hohe Ausbeute an durch die Fermentation von Biomasse gewonnenen Nährstoffen ergibt.

Weiter ist es für die Extraktion von Nährstoffen aus Biomasse mittels einer Biomassefermentation besonders vorteilhaft, wenn das flüssige Biomasseextrakt durch eine Wärmebehandlung und/oder Entsaftung von in biologisch stabilisiertem Wasser befindlichen Pflanzen, insbesondere Brennnesseln, hergestellt wird. Die Verwendung von Brennnesseln für die Herstellung des Biomasseextrakts ist besonders vorteilhaft, da es sich dabei um eine besonders anspruchslose Pflanze handelt, die ohne spezielle Aufzucht in großem Umfang vorhanden ist und zudem einen hohen Gehalt an Stickstoff aufweist. Dieser Stickstoff kann durch die Fermentation des Biomasseextrakts effektiv zurückgewonnen und über das erfindungsgemäße Düngemittel wieder dem Boden zugeführt werden.

Eine besonders effektive Bereitstellung von zusätzlichen Nährstoffen aus der Fermentation des Biomasseextrakts kann dadurch erreicht werden, dass zur Herstellung des Biomasseextrakts zwischen 5 und 60 g Biomasse, insbesondere Pflanzen, pro Liter biologisch stabilisierten Wassers verwendet werden. Die genaue Massenkonzentration, welche die besten Ergebnisse liefert, hängt dabei von der jeweils verwendeten Biomasse bzw. Pflanze ab.

Zur Herstellung eines hochwertigen Biomassenextrakts sieht das erfindungsgemäße Verfahren weiter vor, dass die in biologisch stabilisiertem Wasser befindliche Biomasse bzw. Pflanzen eine Wärmebehandlung bei einer Temperatur zwischen 75 und 95° C, insbesondere zwischen 80 und 90° C, erfährt bzw. erfahren.

Die bestmögliche Wirkung auf eine anschließende Extraktion von Nährstoffen aus dem Biomasseextrakt wird gewährleistet, wenn die Wärmebehandlung über einen Zeitraum von 5 bis 25 Minuten, insbesondere über einen Zeitraum von 10 bis 20 Minuten, erfolgt.

Neben der Aufgabe der Trägerlösung, die durch die künstliche bzw. abiotische Verwitterung bereitgestellten Nährstoffe und die durch die Biomassefermentation bereitgestellten Nährstoffe aufzunehmen, ist weiter vorgesehen, dass durch den Nährlösungsanteil der Trägerlösung die Aktivität der im Boden befindlichen Mikroorganismen angeregt wird. Da sich der Stoffwechsel von bodeneigenen Mikroorganismen durch Zucker, insbesondere durch Beiprodukte der Zuckerraffinierung wie beispielsweise Molasse, fördern lässt, sieht das erfindungsgemäße Verfahren vor, dass die Nährlösung zumindest in biologisch stabilisiertem Wasser gelösten Zucker, insbesondere Molasse, enthält. Die Verwendung von biologisch stabilisiertem Wasser ermöglicht es, dass keine Pflanzenschädlinge und/oder Keime das erfindungsgemäße Düngemittel verunreinigen.

Für die Herstellung der Nährlösung ist weiter vorgesehen, dass 20 bis 50 ml bzw. 40 bis 60 g Zucker, insbesondere Molasse, pro Liter biologisch stabilisierten Wassers verwendet werden.

Um die Ausbringung des erfindungsgemäßen Düngemittels zu erleichtern und/oder einen zusätzlichen positiven Effekt auf die mechanische Struktur des zu düngenden Bodens auszuüben, wird in einer vorteilhaften Ausführungsform des Verfahrens das Düngemittel zu einem Trägermaterial, insbesondere einem organischem Trägermaterial, gegeben. Dabei ist eine vorherige Anpassung des pH-Werts des Düngemittels auf einen neutralen pH-Wert besonders vorteilhaft. Dabei kann vorgesehen sein, dass ein Trägermaterial verwendet wird, welches reich an Stickstoffverbindungen und/oder Huminstoffen, insbesondere aus den Gruppen Lignin, Cellulose, Pflanzenharze und Pflanzenwachse, und/oder Kohlenhydraten ist. Durch die Verwendung eines Trägermaterials wird dem Düngemittel zusätzlich die Funktionalität eines Bodenverbesserungsmittels verliehen.

Eine besonders weitreichende positive Wechselwirkung zwischen dem erfindungsgemäßen Düngemittel und einem organischen Trägermaterial kann erreicht werden, wenn es sich bei dem organischen Trägermaterial, zu dem das Düngemittel gemäß einer vorteilhaften Ausführungsform gegeben wird, um organische Düngemittel, insbesondere Kompost und/oder Torf und/oder hydrothermisch zellaufgeschlossene und/oder hygienisierte und/oder aufgefaserte Holzfasersubstrate, handelt. Diese organischen Düngemittel können insbesondere die mechanische Struktur eines Bodens verbessern und dadurch Wasser und Nährstoffspeicherkapazität erhöhen sowie die bodeneigene Regeneration unterstützen. Da diese organischen Düngemittel von sich aus nur ein sehr geringes Nährstoffangebot, insbesondere aus einem engen Spektralbereich der benötigten Nährstoffe, bereitzustellen vermögen, ist die Kombination eines organischen Düngemittels mit dem erfindungsgemäßen Düngemittel bzw. mit der Kombination aus einer erfindungsgemäßen Trägerlösung, die zumindest eine nach der künstlichen Verwitterung zumindest einer mineralstoffhaltigen Substanz mit der Ausgangslösung entstandene Lösung umfasst, besonders vorteilhaft. Zum Beispiel kann vorgesehen sein, dass das organische Trägermaterial bzw. das organische Düngemittel zu 20% bis 40% Massenanteil aus Nährhumus und zu 60% bis 80% Massenanteil aus Dauerhumus besteht.

Die technische Bodenbildung kann weiter verbessert werden, wenn das organische Trägermaterial bzw. das organische Düngemittel zudem mit Tonmineralien angereichert wird. Dabei lassen sich beispielsweise Montmorollonit und/oder Zeolith und/oder weitere Geomineralien als Zugabe zu dem organischen Trägermaterial bzw. zu dem organischen Dünger verwenden.

Weiter ist es gemäß einer weiteren Ausführungsform des erfindungsgemäßen Verfahrens möglich, das erfindungsgemäße Düngemittel zu einem Granulat weiterzuverarbeiten. Dabei ist beispielsweise vorgesehen, dass das Granulat das erfindungsgemäße Düngemittel und/oder die Düngemittelvorstufe und/oder Urgesteinsmehl, insbesondere Diabasmehl, und Lignit bzw. Lignitmehl, insbesondere mit einer Korngröße von 10µm bis 40µm, und ein Bindemittel, insbesondere ein stärkehaltiges oder ligninsulfonathaltiges Bindemittel, umfasst. Die Weiterverarbeitung zu einem Granulat führt insbesondere bei der Rasendüngung, wie beispielweise auf Golfplätzen, zu einer sehr einfachen und erfolgreichen Düngung. Auch für die Ausbringung auf Hängen, vorzugsweise bei einer Ausbringung aus der Luft, beispielsweise mit einem Flugzeug oder einem Helikopter, eignet sich das Granulat besonders gut.

Alternativ zur Zugabe des erfindungsgemäßen Düngemittels zu einem organischen Trägermaterial sieht das erfindungsgemäße Verfahren in einer weiteren vorteilhaften Ausführungsform vor, dass die zumindest eine mineralstoffhaltige Substanz zumindest ein organisches Ausgangssubstrat umfasst. Damit können die Vorteile einer Biomassefermentationslösung und einer Zugabe des fertigen Düngemittels zu einem organischen Trägermaterial, insbesondere einem organischen Düngemittel, erreicht werden, wobei sich der verfahrenstechnische Gesamtaufwand zur Herstellung des entsprechenden organo-mineralischen Düngemittels deutlich verringern lässt. Auch hier kann somit die Funktionalität eines Düngemittels mit der Funktionalität eines Bodenverbesserungsmittels verknüpft werden. Wird der mineralstoffhaltigen Substanz zumindest ein organisches Ausgangssubstrat zugegeben, so lässt sich dies alternativ zu dem Begriff der mineralstoffhaltigen Substanz auch durch den Begriff eines organo-mineralischen Compounds beschreiben. Bei der Zugabe der sauren Ausgangslösung zu dem organo-mineralischen Compound ist ein Volumen von 333 ml Ausganglösung zu bis zu 1 t bzw. bis zu 5 m³ organischem Compound ausreichend.

Dabei hat sich als besonders vorteilhaft erwiesen, wenn es sich bei dem organischen Ausgangssubstrat um Holzabfälle, insbesondere Weichholzabfälle, und/oder Bioabfälle und/oder Wirtschaftsdünger handelt. Bei diesen organischen Ausgangssubstraten handelt es sich um Substanzen, welche bekanntermaßen über natürliche Verrottung schneller abbaubar sind und sich dementsprechend auch für eine technische Verrottung, insbesondere in Kombination mit der Verwitterung einer mineralstoffhaltigen Substanz, eignen.

Um insbesondere die technische Verrottung bzw. Umsetzung des organischen Ausgangssubstrats durch die Zugabe der sauren Ausgangslösung zu ermöglichen bzw. zu erleichtern, sieht eine vorteilhafte Variante des erfindungsgemäßen Verfahrens vor, dass die mineralstoffhaltige Substanz bzw. das organo-mineralische Compound vor der Zugabe der Ausgangslösung einer Druck- und/oder Wärmebehandlung unterzogen wird.

Dabei ist es weiter vorteilhaft, wenn der Druck- und/oder Wärmebehandlung eine Vorhomogenisierung vorausgeht. Diese gewährleistet, dass die Prozesse, die durch die Druck- und/oder Wärmebehandlung ausgeführt bzw. eingeleitet oder initiiert werden, im gesamten organo-mineralischen Compound gleichmäßig ab- bzw. anlaufen. Durch einen Mischvorgang, beispielsweise mittels eines Anbaumischers, kann eine derartige Vorhomogenisierung mit geringem prozesstechnischem Aufwand realisiert werden.

Für das erfindungsgemäße Verfahren ist es dabei besonders vorteilhaft, wenn während der Druck- und/oder Temperaturbehandlungen der mineralstoffhaltigen Substanz zumindest temporär auf die mineralstoffhaltige Substanz wirkende Drücke und/oder Temperaturen zumindest eine Hygienisierung und/oder eine Inkohlung und/oder eine Humifizierung und/oder einen Zellstoffaufschluss und/oder eine Auffaserung in der mineralstoffhaltigen Substanz ermöglichen. Dabei laufen die eben genannten Prozesse insbesondere in dem in der mineralstoffhaltigen Substanz enthaltenen organischen Ausgangssubstrat ab. Dementsprechend wird für das organische Ausgangssubstrat sichergestellt, dass die zumindest teilweise auf mechanische Einflüsse zurückzuführende physikalische Verrottung, welche in der Natur bei der Umsetzung organischer Materialien ebenfalls stattfindet, auch im erfindungsgemäßen Verfahren ablaufen kann.

Dazu ist insbesondere vorteilhaft, wenn bei einer kombinierten Druckwärmebehandlung der mineralstoffhaltigen Substanz Drücke im Bereich von 200 bis 600 bar, insbesondere im Bereich von 380 bis 520 bar und Temperaturen im Bereich von 200 bis 300° C, insbesondere im Bereich von 210 bis 250° C, auf die mineralstoffhaltige Substanz einwirken. Dadurch können die gewünschten Prozesse innerhalb der mineralstoffhaltigen Substanz in sehr kurzer Zeit und sehr großem Umfang ablaufen. Dies ermöglicht wiederum eine sehr günstige bzw. großtechnische Herstellung eines entsprechenden Düngemittels mit sehr geringen Prozesszeiten.

Da bei einer Druck- und/oder Wärmebehandlung des organo-mineralischen Compounds neben Wasserdampf auch andere Gase, insbesondere Kohlenwasserstoffgase, wie beispielsweise Methangas CH₄, und/oder stickstoffhaltige Gase, wie beispielsweise Stickstoffdioxid NO₂, entstehen, ist eine Kontrolle bzw. gezielte Beeinflussung der Atmosphäre während und/oder nach der Druck- und oder Wärmebehandlung angemessen. Hierzu bietet sich für das erfindungsgemäße Verfahren insbesondere die Anregung elektrischer Entladungen in der Atmosphäre der Druck- und/oder Wärmebehandlung an. Durch die Anregung elektrischer Entladungen können brennbare Kohlenwasserstoffgase gezielt abgebrannt werden. Zudem erlauben angeregte elektrische Entladungen die Stickstoffdeposition von in stickstoffhaltigen Gasen gebundenem Stickstoff in die mineralstoffhaltige Substanz, wodurch wiederum der Stickstoffgehalt des Düngemittels mit Eigenschaften eines Bodenverbesserungsmittels verbessert wird, was wiederum die Wirksamkeit der Düngung bzw. Bodenverbesserung erhöht. Für eine optimale Wirkung der angeregten elektrischen Entladungen ist es für das erfindungsgemäße Verfahren vorteilhaft, wenn diese in dem Bereich der Wärme- und/oder Druckbehandlung angeregt werden, in dem die höchsten Gaskonzentrationen von stickstoffhaltigen Gasen und/oder Kohlenwasserstoffgasen zu erwarten sind.

Für die Aufbringung der sauren Ausgangslösung auf die mineralstoffhaltige Substanz kann vorgesehen sein, dass die Ausgangslösung zunächst mit enthärtetem und biologisch stabilisiertem Wasser verdünnt bzw. vermischt und anschließend in der Form eines Sprühnebels aufgetragen bzw. beigegeben wird.

Eine Vorraussetzung für eine gleichbleibend hohe Qualität eines derartigen Düngemittels, welches durch die Verwendung des organischen Ausgangssubstrats auch die Funktionalität eines Bodenverbesserungsmittels umfasst, ist, dass die Ausgangslösung gleichmäßig auf alle Komponenten der mineralstoffhaltigen Substanz einwirken kann. Damit sind die künstliche Verwitterung der Mineralien und die biochemische Verrottung der organischen Bestandteile gleichzeitig möglich. Demnach sieht das erfindungsgemäße Verfahren vor, dass die mineralstoffhaltige Substanz nach der Zugabe der Ausgangslösung einem Durchmischungsvorgang unterzogen wird.

Zudem ist es für die Düngewirkung eines derartigen, technisch hergestellten Düngemittels besonders vorteilhaft, wenn dieses eine größtmögliche Homogenität aufweist. Nur so kann eine Unter- bzw. Überdosierung bei der jeweiligen Anwendung vermieden werden. Deshalb besteht eine weitere besonders vorteilhafte Ausführungsform des erfindungsgemäßen Verfahrens darin, dass die mineralstoffhaltige Substanz nach der Zugabe der Ausgangslösung einem Homogenisierungsvorgang unterzogen wird.

Um die Herstellung des erfindungsgemäßen Düngemittels, welches auch als technisch hergestellter, nährstoffbeladener Dauerhumus beschrieben werden kann, möglichst schnell, mit hohem Durchsatz, geringem Anlageaufwand und dadurch auch preisgünstig durchführen zu können, ist eine Vorrichtung zur Herstellung eines organo-mineralischen Düngers denkbar.

Ein organo-mineralischer Compound kann im Anschluss an eine hydrothermale Vorverarbeitung mit einer sauren Ausgangslösung versetzt werden, welche zumindest die technische Verwitterung der in dem Compound enthaltenen Mineralien auslöst. Die Bereitstellung eines organo-mineralischen Compounds wird durch die Vorrichtung dadurch ermöglicht, dass sich mehrere Bevorratungsvorrichtungen entlang einer ersten Transportvorrichtung befinden, wobei es sich um zumindest eine Biomassebevorratungsvorrichtung und zumindest eine Gesteinsmehlbevorratungsvorrichtung handelt, welche jeweils zumindest eine Auslassvorrichtung aufweisen. Damit wird der Auslass von Biomasse und Gesteinsmehl auf oder in die erste Transportvorrichtung ermöglicht. Der ersten Transportvorrichtung in Transportrichtung nachgeordnet umfasst die Vorrichtung eine Verdichtungsvorrichtung, welche eine mineralstoffhaltige Substanz bzw. einen organo-mineralischen Compound von der ersten Transportvorrichtung aufnimmt, unter Druck und Wärmezufuhr temporär verdichtet und erhitzt und auf eine zweite Transportvorrichtung ausgibt. Dabei kann vorgesehen sein, dass die Gesteinsmehlbevorratungsvorrichtungen jeweils zumindest eine zweite Auslassvorrichtung aufweisen, welche einen Auslass von Gesteinsmehl auf die zweite Transportvorrichtung ermöglicht.

Um eine saure Ausgangslösung für die Lösungsbevorratungsvorrichtung bereitzustellen, die eine Verwitterung von Mineralien und Verrottung von Biomasse ermöglicht, sieht die Vorrichtung vor, dass eine Lösungsbevorratungsvorrichtung eine Lösungsaufnahmevorrichtung umfasst, die zur Aufnahme einer Lösung aus einer Umsetzungsvorrichtung für die Umsetzung einer Nährlösung, insbesondere einer Zuckerlösung mit einer SCOBY, insbesondere Kombucha, vorgesehen ist. Dabei ist weiter vorgesehen, dass die Lösungsbevorratungsvorrichtung oder die Lösungsauslassvorrichtung eine Mischvorrichtung aufweisen, welche das Mischen der sauren Ausgangslösung mit enthärtetem biologisch stabilisiertem Wasser ermöglicht. Dies ermöglicht den Einsatz einer sauren Ausgangslösung in der Vorrichtung, die die in der Natur bei der Verwitterung bzw. Verrottung ablaufenden Prozesse mit einer bis zu eintausend mal schnelleren Prozessgeschwindigkeit ablaufen zu lassen vermag.

Für das Aufbringen der sauren Ausgangslösung bzw. der verdünnten sauren Ausgangslösung ist es vorteilhaft, wenn die Lösungsauslassvorrichtung eine Sprühnebelerzeugungsvorrichtung umfasst, mit der die saure Ausgangslösung in Form eines Sprühnebels auf die mineralstoffhaltige Substanz auf bzw. in der zweiten Transportvorrichtung aufgebracht wird.

Da eine bestimmte Vorverarbeitung insbesondere der Biomasse vor dem Einsatz bzw. der Zugabe der sauren Ausgangslösung für die technische Herstellung des organo-mineralischen Düngemittels bzw. des technisch hergestellten, nährstoffangereicherten Dauerhumus äußerst wünschenswert ist, ist die Verdichtungsvorrichtung bevorzugt derart auszuführen, dass die zumindest temporär auf die mineralstoffhaltige Substanz bzw. das organo-mineralische Compound wirkenden Drücke und/oder Temperaturen zumindest teilweise eine Hygienisierung und/oder eine Inkohlung und/oder eine Humifizierung und/oder einen Zellstoffaufschluss und/oder eine Auffaserung in der mineralstoffhaltigen Substanz bewirken können. Durch die oben genannten Prozesse wird mittels einer thermohydraulischen Beeinflussung eine Teilverrottung der Biomasse verursacht, die dann durch den Einsatz der Ausgangslösung weitergeführt bzw. abgeschlossen werden kann.

Die Verdichtungsvorrichtung ist als Doppelschneckenextruder ausgeführt, wobei ein variabler Wendelgang der beiden Schnecken vorgesehen ist, wobei ein dadurch entstehender Verdichtungsbereich des Doppelschneckenextruders beim Durchgang der mineralstoffhaltigen Substanz einen temporären Druck zwischen 400 und 600 bar und eine temporäre Temperatur zwischen 200 und 300° C in der mineralstoffhaltigen Substanz erzeugen kann. Eine derartige Ausgestaltung der Verdichtungsvorrichtung zeichnet sich insbesondere durch eine geringe Abnutzung und ein dadurch bedingtes geringes Wartungsaufkommen aus.

Für eine optimale Prozessführung in der Verdichtungsvorrichtung ist es denkbar, wenn die mineralstoffhaltige Substanz bzw. das organo-mineralische Compound vor dem Eintritt in die Verdichtungsvorrichtung einer Vorhomogenisierung unterzogen wird. Dadurch wird sichergestellt, dass bei der Verdichtung eine gewisse Grundhomogenität der zu verdichtenden Substanz besteht. Deshalb ist es vorgesehen, dass vor der Verdichtungsvorrichtung eine Vormischvorrichtung angebracht ist. Dabei kann es sich beispielsweise um einen Anbaumischer handeln.

Bei der Verdichtung der mineralstoffhaltigen Substanz in der Verdichtungsvorrichtung entstehen verschiedene Gase. Dabei handelt es sich neben Wasser in der Gasphase hauptsächlich um Kohlenwasserstoffgase sowie stickstoffhaltige Gase der Form NOₓ. Die Kohlenwasserstoffgase sind meist brennbar bzw. leicht entzündlich und bergen daher ein gewisses Risiko für den Betrieb der Vorrichtung. Die stickstoffhaltigen Gase hingegen beinhalten Stickstoff, der in Folge der Einflüsse in der Verdichtungsvorrichtung aus der mineralstoffhaltigen Substanz gelöst wird. Für die Vorrichtung ist es daher besonders wünschenswert, wenn die leicht entzündlichen Kohlenwasserstoffgase kontrolliert in der Verdichtungsvorrichtung abgebrannt werden und zumindest ein Teil des in den stickstoffhaltigen Gasen enthaltenen Stickstoffs in die mineralstoffhaltige Substanz zurückgeführt wird. Dies wird durch eine elektrische Entladungsvorrichtung erreicht, die so ausgeführt ist, dass in der Atmosphäre der Verdichtungsvorrichtung, insbesondere im Bereich der stärksten Versichtung und/oder im Ausgangsbereich, ein pulsierendes elektrisches Feld erzeugt wird, welches elektrische Entladungen anregt. Durch die Entladungen werden die Kohlenwasserstoffgase gezielt abgebrannt, und eine atmosphärische Stickstoffdeposition wird ermöglicht. Mit anderen Worten ausgedrückt bedeutet dies, dass durch die elektrischen Entladungen ein Nettostickstoffeintrag aus den stickstoffhaltigen Gasen zurück in die mineralstoffhaltige Substanz erfolgt und dadurch der Gefahr brennbarer bzw. entzündlicher Gase vorgebeugt wird.

Um das kontrollierte Abbrennen von Kohlenwasserstoffgasen und die Stickstoffdeposition aus der Atmosphäre der Verdichtungsvorrichtung möglichst effektiv zu gewährleisten, sieht die Vorrichtung eine elektrische Entladungsvorrichtung vor, die ein pulsierendes elektrisches Feld mit einer Frequenz von 10 bis 100 Hz und einer Spannung zwischen 10 und 50 kV erzeugt.

Um eine möglichst effektive Umsetzung der Ausgangslösung mit dem organo-mineralischen Compound bzw. der mineralstoffhaltigen Substanz zu ermöglichen, welche wiederum die Verwitterungs- und Verrottungseffizienz bestimmt, ist es vorgesehen, dass entlang der zweiten Transportvorrichtung, an einer in Transportrichtung der Position der Zugabe der sauren Ausgangslösung nachgeordneten Position, eine Durchmischungsvorrichtung vorgesehen ist, welche zur Durchmischung der mineralstoffhaltigen Substanz und der Ausgangslösung dient. Durch die Verbesserung der Umsetzung der sauren Ausgangslösung mit dem organo-mineralischen Compound kann eine gleichbleibend hohe Qualität des hergestellten Düngemittels bzw. Dauerhumus und ein hoher Massendurchsatz durch die Vorrichtung erreicht werden.

Weiter ist für eine gleichbleibend hohe Qualität des mit der Vorrichtung erzeugten organo-mineralischen Düngemittels bzw. des technisch hergestellten nährstoffangereicherten Dauerhumus ein hohes Maß an Homogenität erforderlich. Deshalb ist es vorgesehen, dass entlang der zweiten Transportvorrichtung, an einer in Transportrichtung der Position der Zugabe der sauren Ausgangslösung und/oder der Position der Durchmischungsvorrichtung nachgeordneten Position, eine Homogenisierungsvorrichtung vorgesehen ist, welche zur Homogenisierung des organo-mineralischen Düngers vorgesehen ist.

Eine besonders gute Homogenisierungsleistung wird in der Vorrichtung erreicht, wenn die Homogenisierungsvorrichtung in der Form eines Schneckenextruders ausgeführt ist.

In welcher Form Biomasse in der Biomassebevorratungsvorrichtung eingefüllt, bevorratet und ausgelassen wird, ist grundsätzlich beliebig. Besonders vorteilhaft für die technische Herstellung von nährstoffangereichertem Dauerhumus ist es aber, wenn die Biomassebevorratungsvorrichtung zur Aufnahme, Bevorratung und zum Auslass von Holzabfällen, insbesondere Weichholzabfällen, und/oder Wirtschaftsdünger und/oder Bioabfällen eingerichtet ist.

Da eine Überlastung der Verdichtungsvorrichtung vermieden und eine möglichst effektive technische Verwitterung des organo-mineralischen Compounds bzw. der mineralstoffhaltigen Substanz ermöglicht werden soll, ist die zumindest eine verwendete Korngröße des in den Gesteinsmehlbevorratungsvorrichtungen bevorrateten Gesteinsmehls bzw. der Gesteinsmehle von besonderem Einfluss für die gesamte Vorrichtung. Da sich Gesteinsmehlkorngrößen von 10 bis 40 µm, insbesondere von 10 bis 20 µm, als besonders vorteilhaft für die Düngemittelherstellung erwiesen haben, ist es demnach auch besonders vorteilhaft, wenn die Gesteinsmehlbevorratungsvorrichtungen zur Bevorratung von Gesteinsmehl mit den oben genannten Korngrößen eingerichtet sind.

Weiter ist es vorgesehen, dass die Biomassebevorratungsvorrichtung und/oder zumindest eine Gesteinsmehlbevorratungsvorrichtung in der Form eines Silos ausgeführt ist. Alternativ kann auch die Verwendung von offenen Schubboden- oder Kratzbodenbunkern vorgesehen sein. Dies vermindert die Gefahr von Staub oder Gasselbstentzündungen und/oder - explosionen

Verschiedene Ausführungsformen der Erfindung sind in den Zeichnungen schematisch dargestellt und werden nachfolgend beispielhaft erläutert.

Es zeigen:
- Fig. 1: einen schematisierten Verfahrensablauf gemäß einer ersten Ausführungsform;
- Fig. 2: einen schematisierten Verfahrensablauf gemäß einer zweiten Ausführungsform;
- Fig. 3: eine schematisierte Darstellung der Vorrichtung.

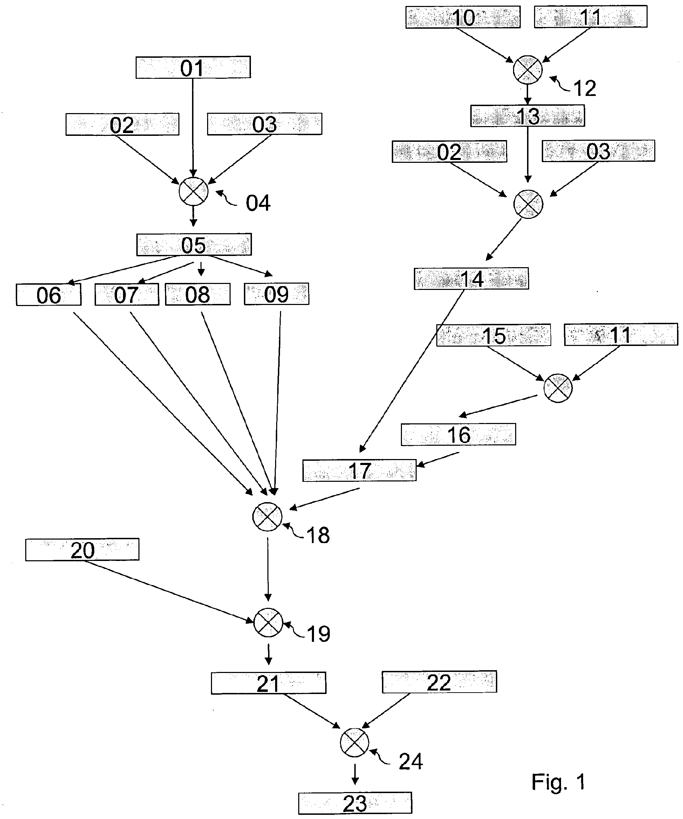

Fig. 1 zeigt eine erste Ausführungsform des erfindungsgemäßen Verfahrens. Zunächst wird eine wässrige Teelösung 01 mit Zucker 02 und einer SCOBY 03 zusammengeführt. Durch die Umsetzung der gezuckerten Teelösung mit der SCOBY 03 im Verfahrensschritt 04 wird die saure Ausgangslösung 05 erzeugt, welche zumindest eine organische Säure, insbesondere Glucuronsäure und/oder rechtsdrehende (L+) Milchsäureessigsäure und/oder Folsäure und/oder Gluconsäure und/oder Weinsäure und/oder Zitronensäure und/oder Milchsäure und/oder Oxalsäure und/oder Kohlensäure und/oder Gerbsäure und/oder Malonsäure und/oder Usninsäure und/oder Bernsteinsäure und/oder Apfelsäure und/oder zumindest eine Aminosäure, enthält. Weiter kann die saure Ausgangslösung 05 die durch die Umsetzung der SCOBY mit der gezuckerten Nährlösung hergestellten Enzyme, beispielsweise Invertase und/oder Amylase und/oder Katalase und/oder Lab-Ezym und/oder Sacharase und/oder proteolytisches Enzym, Alkohole, Bakterien, Hefen, Koffein, antibiotische Substanzen und/oder Polyphenol enthalten. Die saure Ausgangslösung 05 wird dann mit mineralstoffhaltigen Substanzen in Form von Urgesteinsmehl in Verbindung gebracht. Bei dem Urgesteinsmehl handelt es sich um Diabas 06, Diatomeen 07, Lignit 08 und Fe²⁺-haltiges Gesteinsmehl 09.

Außerdem werden Brennnesseln 10 zu biologisch stabilisiertem Wasser 11 zugegeben, wobei zwischen 5 und 60 g Brennnesseln 10 auf einen Liter biologisch stabilisiertes Wasser 11 gegeben werden. Daraufhin folgt im Verfahrensschritt 12 eine Wärmebehandlung und/oder Entsaftung. Die Wärmebehandlung erfolgt bevorzugt bei Temperaturen zwischen 75 und 95° C. Der so entstehende Biomassenextrakt 13 wird ebenfalls mit Zucker 02 und einer SCOBY 03 versetzt, wodurch eine Fermentation ausgelöst wird, die über 3 bis 4 Wochen bei Temperaturen zwischen 20 und 30° C abläuft und deren Ergebnis eine Biomassenfermentationslösung 14 darstellt.

Durch Zugabe von Molasse 15 zu biologisch stabilisiertem Wasser 11 wird eine Nährlösung 16 erzeugt. Dabei wird zur Herstellung der Nährlösung 16 circa 50 g Molasse in 965 ml biologisch stabilisiertem Wasser derart aufgenommen, dass ein Teil, beispielsweise 35 ml, des biologisch stabilisierten Wassers entnommen, darin die Molasse durch Erwärmen aufgelöst und die so entstandene Lösung wieder zum restlichen biologisch stabilisierten Wasser zurückgegeben wird.

Durch Zugabe von Biomassefermentationslösung 14 zur Nährlösung 16 entsteht eine Trägerlösung 17. Es kann dabei vorgesehen sein, dass 35 g der Biomassefermentationslösung zu 965 ml Nährlösung gegeben werden, wobei die Temperatur bevorzugt aufeinen Bereich zwischen 20° C und 35° C eingestellt wird. Zu der Trägerlösung wird dann die durch technische Verwitterung von Diabas 06, Diatomeen 07, Lignit 08 und Fe²⁺-haltigem Gesteinsmehl 09 erzeugte Lösung bzw. Düngemittelvorstufe gegeben. Die volumenmäßige Beigabe der Düngemittelvorstufen aus der Umsetzung der sauren Ausgangslösung 05 mit 06 bis 09 zur Trägerlösung 17 erfolgt dabei mit äquivalenten Volumenanteilen. Beispielsweise kann eine Zugabe von jeweils 50 ml der Düngemittelvorstufe zu 1000 ml der Trägerlösung vorgesehen werden. Nach der Zugabe der Düngemittelvorstufen aus der Umsetzung der sauren Ausgangslösung 05 mit 06 bis 09 zu der Trägerlösung 17 im Verfahrensschritt 18 erfolgt im Verfahrensschritt 19 eine Anpassung des pH-Werts durch Zugabe eines Verdünnungsmittels 20.

Das so hergestellte Düngemittel 21 kann mit einem organischen Trägermittel 22 in geeigneten Mischungsverhältnissen zu einem organo-mineralischen Düngemittel 23 im Verfahrensschritt 24 vermischt werden. Als Trägermaterial kann beispielsweise ein Granulat aus Geomineralien und/oder Tonmineralien und/oder Lignit verwendet werden.

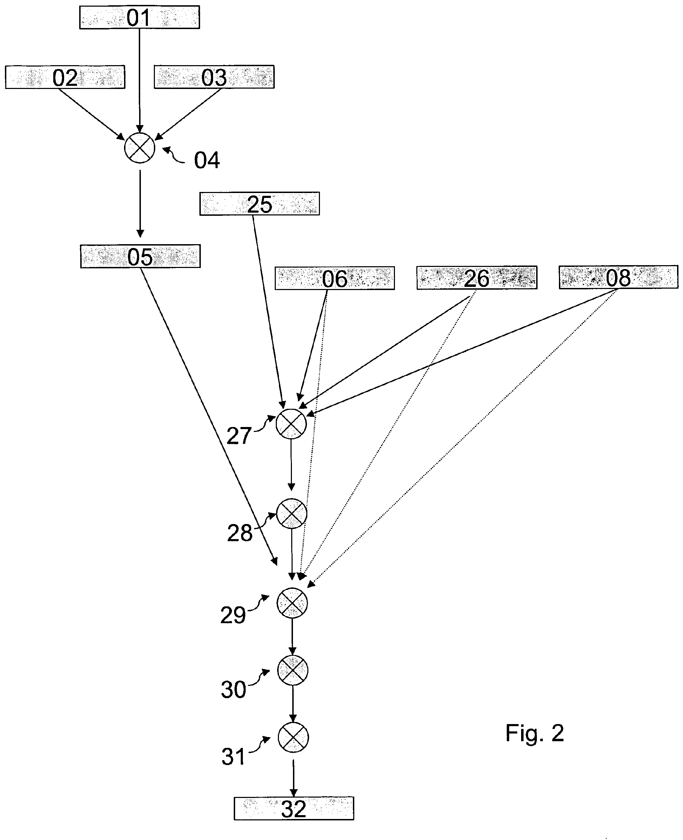

Fig. 2 zeigt eine zweite Ausführungsform des erfindungsgemäßen Verfahrens. Auch hier wird zunächst eine Nährlösung aus Teelösung 01 und Zucker 02 mit einer SCOBY 03 versetzt und im Verfahrensschritt 04 durch Umsetzung des in der Nährlösung enthaltenen Zuckers 02 in eine saure Ausgangslösung 05, welche einen pH-Wert unter 3 aufweist, umgesetzt.

Zu einem organischen Ausgangssubstrat 25 werden Gesteinsmehle von Diabas 06, Betonit 26 und Lignit 08 gegeben. Die Korngrößen der jeweiligen Gesteinsmehle betragen zwischen 10 und 40 µm. Durch die Zusammenfügung des organischen Ausgangssubstrats 25 mit dem Gesteinsmehl 6, 26 und 8 entsteht im Verfahrensschritt 27 ein organomineralisches Compound, welches einer Druck- und/oder Wärmebehandlung 28 ausgesetzt wird. Anschließend erfolgt im Verfahrensschritt 29 die Zugabe der sauren Ausgangslösung 05 zu dem thermisch und/oder mechanisch aufbereiteten organo mineralischen Compound. Vorteilhafterweise wird die saure Ausgangslösung vor der Zugabe mit enthärtetem und biologisch stabilisiertem Wasser verdünnt (nicht gezeichnet). Dabei werden eine technische Verwitterung der Mineralien sowie eine biochemische Verrottung des organischen Materials ausgelöst. Die Verwitterung der Mineralien sowie die Verrottung des organischen Materials kann durch einen Vermischungsvorgang 30 verbessert werden. Mittels eines Homogenisierungsvorgangs 31 kann schließlich ein technisch hergestellter, nährstoffangereicherter Dauerhumus 32 mit gleichbleibend hoher Nährstoffbeladung hergestellt werden.

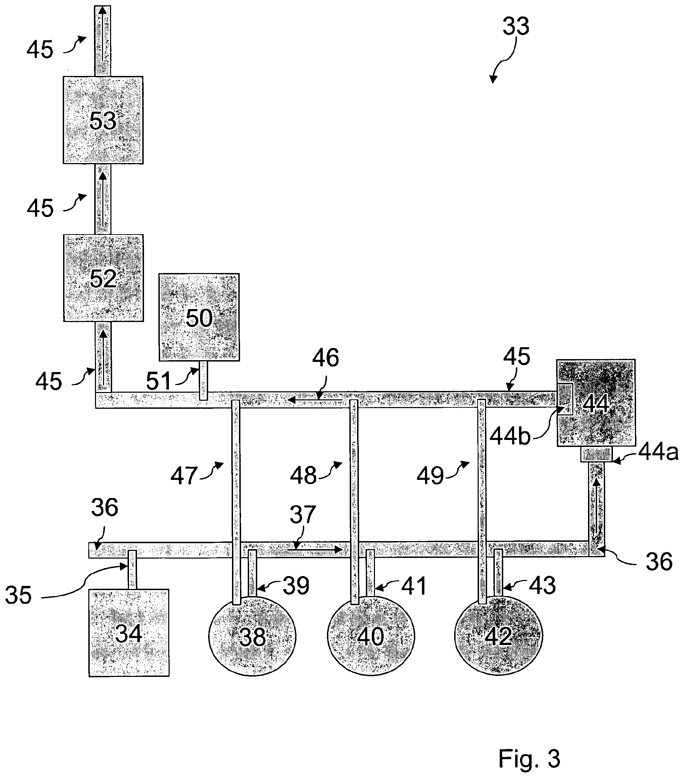

Fig. 3 zeigt eine schematisierte Darstellung der Vorrichtung 33. Aus einer Biomassebevorratungsvorrichtung 34 wird über eine Auslassvorrichtung 35, welche zum Auslass von Biomasse geeignet ist, Biomasse auf eine erste Transportvorrichtung 36 ausgelassen. Die Transportvorrichtung 36 kann beispielsweise in Form eines Förderbands ausgebildet sein. Die Transportrichtung der Transportvorrichtung 36 wird durch den Richtungspfeil 37 angezeigt. Nach der Zugabe von Biomasse auf die Transportvorrichtung 36 wird von einer Gesteinsmehlbevorratungsvorrichtung 38 über eine Auslassvorrichtung 39 Diabas-Gesteinsmehl auf die Transportvorrichtung 36 und die darauf befindliche Biomasse gegeben. Bei weiterem Transport entlang der ersten Transportvorrichtung 36 wird weiter Betonit-Gesteinsmehl aus der Gesteinsmehlbevorratungsvorrichtung 40 über die Auslassvorrichtung 41 auf die erste Transportvorrichtung gegeben sowie Lignitmehl aus der Gesteinsmehlbevorratungsvorrichtung 42 mittels der Auslassvorrichtung 43 auf die Transportvorrichtung gegeben.

Das so geformte Compoundgefüge aus Biomasse und Gesteinsmehl wird von der ersten Transportvorrichtung 36 in eine Verdichtungsvorrichtung 44 transportiert. Die Verdichtungsvorrichtung 44 kann beispielsweise als Doppelschneckenextruder ausgeführt sein, dessen Wendelgänge einen Verdichtungsbereich aufweisen und das lose Biomassegesteinsmehl-Compound bei geringem Verschleiß unter hoher Druck- und Temperatureinwirkung stark verdichten bzw. erhitzen. Dabei kann eine Vorhomogenisierung des Compounds mittels einer der Verdichtungsvorrichtung vorgeschalteten Vorhomogenisierungsvorrichtung 44a, welche beispielsweise als Anbaumischer ausgeführt ist, erfolgen.

Außerdem kann die Verdichtungsvorrichtung über eine elektrische Entladungsvorrichtung 44b verfügen, mit der bei der Verdichtung entstehende, brennbare Gase abgebrannt und eine Stickstoffdeposition von in stickstoffhaltigen Gasen gebundenem Stickstoff zurück in das Compound ermöglicht wird. Die elektrische Entladungsvorrichtung ist dabei bevorzugt im Ausgangsbereich der Verdichtungsvorrichtung angebracht und erzeugt ein pulsierendes elektrisches Feld mit einer Frequenz von 10 bis 100 Hz und einer Spannung von 10 bis 50 kV.

Nach dem Durchlaufen der Verdichtungsvorrichtung 44 wird das organo-mineralische Compound auf eine zweite Transportvorrichtung 45 ausgegeben, die den weiteren Transport in Richtung des Richtungspfeils 46 gewährleistet. Nach Durchlaufen der Verdichtungsvorrichtung 44 können auf der zweiten Transportvorrichtung 45 über jeweils zweite Auslassvorrichtungen 47, 48 und 49 der Gesteinsmehlbevorratungsvorrichtungen 38, 40 und 42 erneut Diabas und/oder Betonit und/oder Lignit-Gesteinsmehl zu dem organo-mineralischen Compound auf der zweiten Transportvorrichtung 45 zugegeben werden. Aus einer Lösungsbevorratungsvorrichtung 50, die zur Bevorratung einer sauren Ausgangslösung eingerichtet ist, wird die saure Ausgangslösung über eine Auslassvorrichtung 51 auf die zweite Transportvorrichtung 45 und das darauf befindliche Compound ausgelassen. Zur Auftragung eignet sich in besonderer Weise eine Sprühnebelerzeugungsvorrichtung, welche von der Lösungsauslassvorrichtung umfasst bzw. an diese anschließbar ist und das Besprühen der mineralstoffhaltigen Substanz mit der sauren Ausgangslösung bzw. einer verdünnten sauren Ausgangslösung in der Form eines Sprühnebels erlaubt. Zudem ist es vorteilhaft, wenn die saure Ausgangslösung vor Aufbringung auf das ogano-mineralische Compound verdünnt wird. Daher kann vorgesehen werden, dass die Lösungsbevorratungsvorrichtung oder die Lösungsauslassvorrichtung eine Mischvorrichtung aufweisen, welche das Mischen der sauren Ausgangslösung mit enthärtetem, biologisch stabilisiertem Wasser ermöglicht.

Die einsetzenden mineralischen Verwitterungs- und organischen Verrottungsprozesse werden dadurch unterstützt, dass eine Durchmischungsvorrichtung 52 entlang der zweiten Transportvorrichtung 45 in Transportrichtung 46 hinter dem Auslass der Lösungsbevorratungsvorrichtung 50 angeordnet ist. Zusätzlich ist entlang der Transportvorrichtung 45 der Durchmischungsvorrichtung 52 eine Homogenisierungsvorrichtung 53 in Transportrichtung nachgeschaltet. Diese kann in Form eines Schneckenextruders ausgeführt sein und dient zur Homogenisierung des technisch erzeugten, nährstoffangereicherten Dauerhumus bzw. Bodenverbesserungsmittels.

## Patentansprüche

1. Verfahren zur Herstellung einer Düngemittelvorstufe oder eines Düngemittels, umfassend die folgenden Verfahrensschritte:
a) Umsetzung einer gezuckerten Teelösung (01. 02) mit Kombucha als Umsetzung einer Nährlösung mit einer symbiotischen Hefe-Bakterien-Kolonie (03) (SCOBY: symbiotic colony of bacteria and yeasts) zur Herstellung einer sauren Ausgangslösung (05), in der zumindest eine organische Säure gelöst vorliegt, wobei der pH-Wert der Ausgangslösung (05) in einem Bereich zwischen 0 und 3 liegt;
b) Zugabe der sauren Ausgangslösung (05) zu zumindest einer mineralstoffhaltigen Substanz, wobei die zumindest eine mineralstoffhaltige Substanz Gesteinsmehl umfasst und wobei die Gesteinsmehle mit Korngrößen von 10-40 µm, insbesondere mit Korngrößen von 10-20 µm, in der zumindest einen mineralstoffhaltigen Substanz vorliegen;
c) künstliche Verwitterung der in der mineralstoffhaltigen Substanz enthaltenen Mineralien durch die Ausgangslösung, wobei die künstliche Verwitterung der zumindest einen mineralstoffhaltigen Substanz mit der Ausgangslösung (05) über einen Zeitraum von 7-60 Tagen, insbesondere 30-60 Tagen, erfolgt.

2. Verfahren nach Anspruch 1,
**dadurch gekennzeichnet,**
**dass** zumindest eine Aminosäure in der Ausgangslösung (05) gelöst ist, und/oder zumindest ein Enzym in der Ausgangslösung (05) gelöst ist, und/oder zumindest ein Alkohol in der Ausgangslösung (05) gelöst ist, und/oder die Ausgangslösung (05) zumindest eine Bakterienart enthält, und/oder zumindest ein Hefestamm in der Ausgangslösung (05) gelöst ist, und/oder Koffein in der Ausgangslösung (05) gelöst ist, und/oder zumindest eine antibiotische Substanz in der Ausgangslösung (05) gelöst ist, und/oder zumindest ein Polyphenol in der Ausgangslösung (05) enthalten ist.

3. Verfahren nach Anspruch 1 oder 2,
**dadurch gekennzeichnet,**
**dass**, das Gesteinsmehl Urgesteinsmehl oder Geomineralmehl, umfasst und/oder dass die zumindest eine mineralstoffhaltige Substanz Urgesteinsmehl aus Diabas (6) und/oder Diatomeen (07) und/oder Bentonit (26) umfasst und/oder Lignit (08) umfasst und/oder dass die zumindest eine mineralstoffhaltige Substanz Fe²⁺-haltiges Gesteinsmehl (09) umfasst.

4. Verfahren nach einem der Ansprüche 1 bis 3,
**dadurch gekennzeichnet,**
**dass** die zumindest eine mineralstoffhaltige Substanz bei der künstlichen Verwitterung mit der sauren Ausgangslösung von einem für die Ausgangslösung durchlässigen Gefäß, insbesondere einem textilen Gewebebeutel aus synthetischer und/oder natürlicher Faser, umschlossen wird.

5. Verfahren nach einem der Ansprüche 1 bis 4,
**dadurch gekennzeichnet,**
**dass** zumindest eine nach der künstlichen Verwitterung der zumindest einen mineralstoffhaltigen Substanz mit der Ausgangslösung (05) entstandene Lösung, insbesondere die durch eine jeweilige künstliche Verwitterung von Diabas- (06) und Diatomeen- (07) und Lignit-Gesteinsmehl (08) und Fe²⁺-haltigem Gesteinsmehl (09) entstandenen Lösungen, zu einer Trägerlösung 17 gegeben wird / gegeben werden, und insbesondere nach Zugabe der zumindest einen durch künstliche Verwitterung zumindest einer mineralstoffhaltiger Substanz gewonnenen Lösung zur Trägerlösung (17) eine Verdünnung bis zu einem neutralen pH-Wert, insbesondere einem pH-Wert zwischen 6,8 und 7,2, erfolgt.

6. Verfahren nach Anspruch 5,
**dadurch gekennzeichnet,**
**dass** die Trägerlösung durch Mischen von zumindest einer Biomassefermentationslösung (14) und einer Nährlösung (16) hergestellt wird, wobei insbesondere die Biomassefermentationslösung durch Fermentation eines flüssigen, gezuckerten Biomasseextraktes (2, 13) mit einer SCOBY (03), insbesondere Kombucha, gewonnen wird, wobei insbesondere die Fermentation bei Temperaturen von 20° C - 30° C, insbesondere bei 24° C - 28° C, und insbesondere über einen Zeitraum von 3 - 4 Wochen erfolgt, erfolgt.

7. Verfahren nach Anspruch 6,
**dadurch gekennzeichnet,**
**dass** das flüssige Biomasseextrakt (13) durch eine Wärmebehandlung und/oder Entsaftung von in biologisch stabilisiertem Wasser (11) befindlichen Pflanzen (10), insbesondere Brennnesseln, hergestellt wird, wobei insbesondere die Massenkonzentration der in Wasser befindlichen Pflanzen (10) 5 g/l - 60 g/l beträgt und insbesondere die Wärmebehandlung der in Wasser befindlichen Pflanzen (10) bei 75° C - 95° C, insbesondere bei 80° C - 90° C, erfolgt, und insbesondere die Wärmebehandlung über einen Zeitraum von 5 min - 25 min, insbesondere über einen Zeitraum von 10 min - 20 min, erfolgt.

8. Verfahren nach einem der Ansprüche 6 oder 7,
**dadurch gekennzeichnet,**
**dass** die Nährlösung (16) zumindest in biologisch stabilisiertem Wasser (11) gelösten Zucker, insbesondere Molasse (15), enthält, und insbesondere zur Herstellung der Nährlösung (16) anteilig 20 ml - 50 ml bzw. 40 g - 60 g Zucker pro 965 ml biologisch stabilisierten Wassers (11) in das biologisch stabilisierte Wasser (11) zugegeben werden.

9. Verfahren nach einem der Ansprüche 6 bis 8,
**dadurch gekennzeichnet,**
**dass** eine Lösung, umfassend zumindest eine nach der künstlichen Verwitterung der zumindest einen mineralstoffhaltigen Substanz mit der Ausgangslösung (05) entstandene Lösung und eine Trägerlösung, zu einem organischen Trägermaterial (22) gegeben wird, wobei es sich bei dem organischen Trägermaterial (22) insbesondere um organische Dünger, insbesondere Kompost und/oder Torf und/oder hydrothermisch zellstoffaufgeschlossene und/oder hygienisierte und/oder aufgefaserte Holzfasersubstrate, handelt.

10. Verfahren nach einem der Ansprüche 1 bis 4,
**dadurch gekennzeichnet,**
**dass** die mineralstoffhaltige Substanz zumindest ein organisches Ausgangssubstrat (25) umfasst, wobei es sich bei dem organischen Ausgangssubstrat (25) insbesondere um Holzabfälle, insbesondere Weichholzabfälle, und/oder Bioabfälle und/oder Wirtschaftsdünger handeln kann und wobei insbesondere die mineralstoffhaltige Substanz vor der Zugabe der Ausgangslösung (05) einer Druck- und/oder Wärmebehandlung (28) unterzogen wird und wobei insbesondere die mineralstoffhaltige Substanz vor der Druck- und/oder Wärmebehandlung (28) einer Vorhomogenisierung unterzogen wird.

11. Verfahren nach Anspruch 10,
**dadurch gekennzeichnet,**
**dass** die während der Druck- und/oder Temperaturbehandlung (28) zumindest temporär auf die mineralstoffhaltige Substanz wirkenden Drücke und/oder Temperaturen zumindest eine Hygienisierung und/oder eine Inkohlung und/oder eine Humifizierung und/oder einen Zellstoffaufschluss und/oder eine Auffaserung in der mineralstoffhaltigen Substanz ermöglichen, wobei insbesondere in der Atmosphäre der Druck- und/oder Wärmebehandlung während und/oder vor Ende der Druck- und/oder Wärmebehandlung elektrische Entladungen angeregt werden und wobei insbesondere bei einer kombinierten Druck-Wärmebehandlung (28) Drücke im Bereich von 200 bar - 600 bar, insbesondere im Bereich von 380 bar - 520 bar, und Temperaturen im Bereich von 200° C - 300° C, insbesondere im Bereich von 210° C-250° C, auf die mineralstoffhaltige Substanz einwirken.

## Claims

1. Method for producing a fertilizer precursor or a fertilizer, comprising the following method steps:
a) converting a sugared tea solution (01, 02) using kombucha in the manner of a conversion of a nutrient solution using a symbiotic colony of bacteria and yeasts (SCOBY) (03) for producing an acidic source solution (05), in which at least one dissolved organic acid is present, wherein the pH value of the source solution (05) is in a range between 0 and 3;
b) adding the acidic source solution (05) to at least one substance containing minerals, wherein the at least one substance containing minerals comprises rock flour and wherein the rock flours are present in grain sizes of 10 - 40 µm, in particular in grain sizes of 10-20 µm, in the at least one substance containing minerals;
c) artificial weathering of the minerals present in the substance containing minerals by means of the source solution, wherein the artificial weathering of the at least one substance containing minerals by means of the source solution (05) takes place over a period of 7-60 days, in particular 30 - 60 days.

2. Method according to claim 1,
**characterized in that**
at least one amino acid is dissolved in the source solution (05), and/or at least one enzyme is dissolved in the source solution (05), and/or at least one alcohol is dissolved in the source solution (05), and/or the source solution (05) comprises at least one species of bacteria, and/or at least one yeast strain is dissolved in the source solution (05), and/or caffeine is dissolved in the source solution (05), and/or at least one antibiotic substance is dissolved in the source solution (05), and/or at least one polyphenol is present in the source solution (05).

3. Method according to claim 1 or 2,
**characterized in that**
the rock flour comprises primary rock flour or geomineral flour and/or that the at least one substance containing minerals comprises primary rock flour from diabase (US: greenstone) (6) and/or diatoms (07) and/or bentonite (26) and/or comprises lignite (08) and/or that the at least one substance containing minerals comprises rock flour containing Fe²⁺ (09).

4. Method according to any of the claims 1 to 3,
**characterized in that**
during the artificial weathering by means of the acidic source solution, the at least one substance containing minerals is enclosed by a container that is permeable to the source solution, in particular a textile tissue bag made of synthetic and/or natural fibre.

5. Method according to any of the claims 1 to 4,
**characterized in that**
at least one solution obtained after the artificial weathering of the at least one substance containing minerals by means of the source solution (05), in particular the solutions obtained by a respective artificial weathering of rock flour from diabase (US: greenstone) (06) and diatoms (07) and lignite (08) and rock flour containing Fe²⁺ (09), is/are added to a carrier solution (17), and in particular after adding the at least one solution obtained by artificially weathering at least one substance containing minerals to the carrier solution (17), a dilution to a neutral pH value, in particular a pH value between 6.8 and 7.2, takes place.

6. Method according to claim 5,
**characterized in that**
the carrier solution is produced by mixing at least one biomass fermentation solution (14) and a nutrient solution (16), wherein in particular the biomass fermentation solution is obtained by fermenting a liquid sugared biomass extract (2, 13) with a SCOBY (03), in particular kombucha, wherein in particular the fermentation takes place at temperatures of 20 °C - 30 °C, in particular at 24 °C-28 °C and in particular for a period of 3 - 4 weeks.

7. Method according to claim 6,
**characterized in that**
the liquid biomass extract (13) is produced by treating plants (10) with heat and/or extracting the juice from plants, in particular nettles, that are placed in biologically stabilized water (11), wherein in particular the mass per unit volume of the plants (10) placed in water is 5 g/l - 60 g/l, and in particular the heat treatment of the plants (10) placed in water takes place at 75 °C - 95 °C, in particular at 80 °C - 90 °C, and in particular the heat treatment takes place over a period of 5 min - 25 min, in particular over a period of 10 min - 20 min.

8. Method according to any of the claims 6 or 7,
**characterized in that**
the nutrient solution (16) at least comprises sugar dissolved in biologically stabilized water (11), in particular molasses (15), and in particular for producing the nutrient solution (16), 20 ml - 50 ml or 40 g - 60 g of sugar per 965 ml of biologically stabilized water (11) are added pro rata to the biologically stabilized water (11).

9. Method according to any of the claims 6 to 8,
**characterized in that**
a solution comprising at least one solution obtained after the artificial weathering of the at least one substance containing minerals by means of the source solution (05) and a carrier solution is added to an organic carrier material (22), wherein the organic carrier material (22) in particular includes organic fertilizers, in particular compost and/or peat and/or hydrothermally cellulose-digested and/or sanitized and/or defibrated wood fibre substrates.

10. Method according to any of the claims 1 to 4,
**characterized in that**
the substance containing minerals comprises at least one organic basic substrate (25), wherein the organic basic substrate (25) can be in particular wood waste, in particular soft wood waste, and/or biological waste and/or farm manure, and wherein in particular the substance containing minerals is subjected to a pressure and/or heat treatment (28) prior to the addition of the source solution (05), and wherein in particular the substance containing minerals is subjected to a pre-homogenization prior to the pressure and/or heat treatment (28).

11. Method according to claim 10,
**characterized in that**
the pressures and/or temperatures acting at least temporarily on the substance containing minerals during the pressure and/or heat treatment (28) at least make possible a sanitization and/or a coalification and/or a humification and/or a cellulose digestion and/or a defibration in the substance containing minerals, wherein in particular electric discharges are excited in the atmosphere of the pressure and/or heat treatment during and/or prior to the completion of the pressure and/or heat treatment, and wherein in particular during a combined pressure-heat treatment (28), pressures in the range of 200 bar - 600 bar, in particular in the range of 380 bar-520 bar, and temperatures in the range of 200 °C - 300 °C, in particular in the range of 210 °C - 250 °C, act on the substance containing minerals.

## Revendications

1. Procédé de fabrication d'un précurseur d'engrais ou d'un engrais, comprenant les étapes de procédé suivantes :
a) convertir une solution de thé sucrée (01, 02) à l'aide de kombucha en tant que conversion d'une solution nutritive à l'aide d'une colonie symbiotique de bactéries et levures (03) (SCOBY : *symbiotic colony of bacteria and yeasts*) afin de produire une solution de départ acide (05), dans laquelle au moins un acide organique est présent sous forme dissoute, le pH de la solution de départ (05) se situant dans une gamme comprise entre 0 et 3;
b) ajouter la solution de départ acide (05) à au moins une substance contenant des minéraux, ladite au moins une substance contenant des minéraux comprenant de la poudre de roche et les poudres de roche étant présentes en des tailles du grain de 10 à 40 µm, notamment en des tailles du grain de 10 à 20 µm, dans ladite au moins une substance contenant des minéraux ;
c) effriter artificiellement les minéraux contenus dans la substance contenant des minéraux au moyen de la solution de départ, l'effritement artificiel de ladite au moins une substance contenant des minéraux à l'aide de la solution de départ (05) s'effectuant pendant une période de 7 à 60 jours, notamment de 30 à 60 jours.

2. Procédé selon la revendication 1,
**caractérisé en ce qu'**
au moins un acide aminé est dissout dans la solution de départ (05) et/ou au moins une enzyme est dissoute dans la solution de départ (05) et/ou au moins un alcool est dissout dans la solution de départ (05) et/ou la solution de départ (05) comprend au moins une espèce de bactérie et/ou au moins une souche de levure est dissoute dans la solution de départ (05) et/ou de la caféine est dissoute dans la solution de départ (05) et/ou au moins une substance antibiotique est dissoute dans la solution de départ (05) et/ou au moins un polyphénol est contenu dans la solution de départ (05).

3. Procédé selon la revendication 1 ou 2,
**caractérisé en ce que**
la poudre de roche comprend de la poudre de roche primitive ou de la poudre géominérale et/ou que ladite au moins une substance contenant des minéraux comprend de la poudre de roche primitive de diabase (6) et/ou de diatomées (07) et/ou de bentonite (26) et/ou comprend du lignite (08) et/ou que ladite au moins une substance contenant des minéraux comprend de la poudre de roche contenant du Fe²⁺ (09).

4. Procédé selon l'une quelconque des revendications 1 à 3,
**caractérisé en ce que**
lors de l'effritement artificiel à l'aide de la solution de départ acide, ladite au moins une substance contenant des minéraux est entourée par un récipient perméable à la solution de départ, notamment par un sachet de tissu textile en fibre synthétique et/ou naturelle.

5. Procédé selon l'une quelconque des revendications 1 à 4,
**caractérisé en ce qu'**
au moins une solution obtenue après l'effritement artificiel de ladite au moins une substance contenant des minéraux à l'aide de la solution de départ (05), notamment les solutions obtenues par un effritement artificiel respectif de la poudre de roche de diabase (06) et de diatomées (07) et de lignite (08) et de la poudre de roche contenant du Fe²⁺ (09), est/sont ajoutée(s) à une solution support (17), et notamment après l'ajout de ladite au moins une solution obtenue par l'effritement artificiel d'au moins une substance contenant des minéraux à la solution support (17), on effectue une dilution jusqu'à un pH neutre, notamment à un pH entre 6,8 et 7,2.

6. Procédé selon la revendication 5,
**caractérisé en ce que**
la solution support est produite en mélangeant au moins une solution de fermentation de biomasse (14) et une solution nutritive (16), notamment la solution de fermentation de biomasse étant obtenue en fermentant un extrait de biomasse sucré liquide (2, 13) à l'aide d'une SCOBY (03), notamment la kombucha, la fermentation s'effectuant notamment à des températures de 20 °C à 30 °C, notamment à 24 °C à 28 °C et notamment pendant une période de 3 à 4 semaines.

7. Procédé selon la revendication 6,
**caractérisé en ce que**
l'extrait de biomasse liquide (13) est produit par un traitement thermique et/ou une extraction de jus de plantes (10), notamment des orties, se trouvant dans de l'eau biologiquement stabilisée (11), la concentration de masse des plantes (10) se trouvant dans l'eau étant notamment de 5 g/l à 60 g/l et notamment le traitement thermique des plantes (10) se trouvant dans l'eau s'effectuant à 75 °C à 95 °C, notamment à 80 °C à 90 °C et notamment le traitement thermique s'effectuant pendant une période de 5 min à 25 min, notamment pendant une période de 10 min à 20 min.

8. Procédé selon l'une quelconque des revendications 6 ou 7,
**caractérisé en ce que**
la solution nutritive (16) comprend au moins du sucre dissout dans de l'eau biologiquement stabilisée (11), notamment de la molasse (15), et notamment 20 ml à 50 ml ou 40 g à 60 g de sucre par 965 ml d'eau biologiquement stabilisée (11) sont ajoutés au prorata à l'eau biologiquement stabilisée (11) afin de produire la solution nutritive (16).

9. Procédé selon l'une quelconque des revendications 6 à 8,
**caractérisé en ce qu'**
une solution comprenant au moins une solution obtenue après l'effritement artificiel de ladite au moins une substance contenant des minéraux à l'aide de la solution de départ (05) et comprenant une solution support est ajoutée à un matériau support organique (22), le matériau support organique (22) étant notamment des engrais organiques, notamment du compost et/ou de la tourbe et/ou des substrats en fibres de bois dont la cellulose est digérée hydrothermiquement et/ou des substrats en fibres de bois hygiénisés et/ou défibrés.

10. Procédé selon l'une quelconque des revendications 1 à 4,
**caractérisé en ce que**
la substance contenant des minéraux comprend au moins un substrat de départ organique (25), le substrat de départ organique (25) pouvant être notamment des déchets de bois, notamment des déchets de bois tendre, et/ou des déchets biologiques et/ou le fumier de ferme et notamment la substance contenant des minéraux étant soumise à un traitement sous pression et/ou un traitement thermique (28) avant l'ajout de la solution de départ (05), et notamment la substance contenant des minéraux étant soumise à une pré-homogénéisation avant le traitement sous pression et/ou thermique (28).

11. Procédé selon la revendication 10,
**caractérisé en ce que**
les pressions et/ou les températures agissant au moins temporairement sur la substance contenant des minéraux pendant le traitement sous pression et/ou thermique (28) permettent au moins une hygiénisation et/ou une carbonisation et/ou une humification et/ou une digestion de cellulose et/ou une défibration dans la substance contenant des minéraux, des décharges électriques étant excitées notamment dans l'atmosphère du traitement sous pression et/ou thermique pendant le traitement sous pression et/ou thermique et/ou avant la terminaison du traitement sous pression et/ou thermique, et des pressions dans la gamme de 200 bar à 600 bar, notamment dans la gamme de 380 bar à 520 bar, et des températures dans la gamme de 200 °C à 300 °C, notamment dans la gamme de 210 °C à 250 °C, agissant sur la substance contenant des minéraux notamment pendant un traitement thermique sous pression combiné (28).
